# FASCICULE DE BREVET EUROPEEN

(11) **EP 3 595 943 B1**
(45) Date de publication et mention de la délivrance du brevet: **27.04.2022**
(21) Numéro de dépôt: 18710871.7
(22) Date de dépôt: 13.03.2018
(51) Int. Cl.: B60S 1/38

(54) **ORGANE DE FLEXION POUR BALAI D'ESSUYAGE**
BIEGEELEMENT FÜR WISCHBLATT
BENDING MEMBER FOR WIPER BLADE

(30) Priorité: 14.03.2017 FR 1752084
(43) Date de publication de la demande: 22.01.2020
(73) Titulaire: Valeo Systèmes d'Essuyage, 78322 Le Mesnil Saint Denis (FR)
(72) Inventeur: CAILLOT, Gérald, 78322 Le Mesnil Saint Denis (FR); JARASSON, Jean-Michel, 78322 Le Mesnil Saint Denis (FR); IZABEL, Vincent, 78322 Le Mesnil Saint Denis (FR)
(74) Mandataire: Valeo Visibility
(86) Numéro de dépôt international: PCT/EP2018/056309
(87) Numéro de publication internationale: WO 2018/167102

(56) Documents cités:
- WO-A1-2006/024567
- WO-A1-2008/069464
- WO-A1-2015/158398
- DE-A1-102008 012 466
- FR-A1- 2 867 738

## Description

La présente invention concerne un organe de flexion pour balai d'essuyage. Elle relève plus particulièrement du domaine de l'essuyage de surface vitrée de véhicule, notamment un pare-brise ou une lunette arrière d'un véhicule automobile.

Les véhicules sont couramment équipés de système d'essuie-glace pour assurer un balayage et un lavage du pare-brise ou de la lunette arrière et éviter que la vision qu'a le conducteur de son environnement ne soit perturbée. Ces essuieglaces sont classiquement entraînés par un bras d'entrainement effectuant un mouvement de va-et-vient angulaire et comportent des balais d'essuyage allongés, porteurs eux-mêmes de lames racleuses réalisées en une matière élastique. Ces lames frottent contre la surface vitrée et évacuent l'eau en l'amenant en dehors du champ de vision du conducteur. Les balais d'essuyage sont réalisés sous la forme soit, dans une version classique, de palonniers articulés qui tiennent la lame racleuse en plusieurs endroits discrets, soit, dans une version plus récente dénommée "flat blade" (pour "balai plat"), d'un élément flexible qui maintient la lame racleuse sur toute sa longueur. Dans cette seconde solution, le balai d'essuyage est rattaché au bras d'entrainement tournant du système d'essuyage par un ensemble constitué d'un connecteur et d'un adaptateur. L'invention relève plus particulièrement du domaine des balais d'essuyage du second type.

L'élément flexible assure la répartition d'un effort d'appui généré par le bras d'entraînement sur toute la longueur du balai d'essuyage. Cette répartition est ainsi impactée par la longueur du balai d'essuyage. Il est ainsi connu d'utiliser des éléments flexibles plus ou moins souples en fonction de la longueur du balai d'essuyage concerné. Une telle adaptation de souplesse se fait en adaptant l'épaisseur de l'élément flexible et en adaptant les composants qui sont solidarisés sur cet élément flexible. C'est notamment le cas du connecteur.

Le fabricant de ces balais d'essuyage doit ainsi assurer la fabrication, la gestion et la logistique de plusieurs composants spécifiquement adaptés aux différentes épaisseurs d'éléments flexibles.

Ceci représente un inconvénient majeur et l'invention se propose de réduire l'impact d'un tel inconvénient.

WO 2015/158.398 et WO 2006/024.567 divulguent des balais d'essuyage.

L'invention a donc pour objet un balai d'essuyage selon la revendication 1.

Selon un mode de réalisation de l'invention, la première épaisseur de la portion intermédiaire de la bande peut être inférieure à la deuxième épaisseur de chacune des portions latérales.

Cette bande peut présenter une longueur sensiblement équivalente à la longueur du balai d'essuyage dans lequel l'organe de flexion est intégré. Lorsqu'il est intégré à un balai d'essuyage, les portions latérales de cet organe de flexion forment une zone d'accostage pour un connecteur par l'intermédiaire duquel une lame d'essuyage est rattachée à un bras d'entrainement du balai d'essuyage.

Avantageusement, la deuxième épaisseur des parties latérales est identique d'un balai d'essuyage à l'autre quelle que soit la longueur du balai d'essuyage, permettant ainsi une standardisation du connecteur. La première épaisseur quant à elle est déterminée pour adapter la souplesse des balais d'essuyage sur lesquels cet organe de flexion est monté. Ainsi, il est possible d'utiliser un même type de connecteur, ci-après désigné « connecteur standard », pour des organes de flexion différents utilisés pour des balais d'essuyage de longueur inférieure à 650 mm et pour des balais d'essuyage de longueur supérieure à 650 mm.

On comprend que cette longueur « seuil » de 650 mm n'est donnée qu'à titre d'exemple et ne saurait limiter la présente invention.

Selon l'invention, l'organe de flexion comprend au moins une transition qui s'opère de manière régulière entre la portion intermédiaire et au moins une des portions latérales, avantageusement les deux portions latérales.

Selon un deuxième mode de réalisation non revendiqué, l'organe de flexion comprend au moins une transition entre la portion intermédiaire et au moins une des portions latérales, avantageusement les deux portions latérales, réalisée par un épaulement.

La transition est ainsi soit douce selon le premier mode de réalisation, soit brutale selon le deuxième mode de réalisation.

Selon un exemple du premier mode de réalisation, la portion intermédiaire de l'organe de flexion est délimitée par une première face qui présente un profil concave, vue depuis l'extérieur de l'organe de flexion. Cette portion intermédiaire de l'organe de flexion peut également être délimitée par une deuxième face opposée à la première face par rapport à un premier plan de symétrie passant au centre de la première épaisseur. Cette deuxième face présente alors un profil concave, vue depuis l'extérieur de l'organe de flexion. Selon l'un quelconque des modes de réalisation de l'invention, la deuxième épaisseur est identique, à la tolérance de fabrication près, à chacune des deux portions latérales de la bande. Au moins une portion latérale de l'organe de flexion selon l'invention, et avantageusement les deux portions latérales, comprend une tranche longitudinale de la bande, deux sommets et deux chanfreins qui relient chaque sommet à la tranche longitudinale. La deuxième épaisseur est ainsi mesurée entre les deux sommets d'une même portion latérale.

Selon un exemple de réalisation de la présente invention, la bande présente une symétrie de formes par rapport au premier plan de symétrie qui coupe la bande dans son épaisseur. Optionnellement, cette bande peut également présenter une symétrie de formes par rapport à un deuxième plan de symétrie, perpendiculaire au premier plan de symétrie et passant par le centre de la première épaisseur.

Avantageusement, l'organe de flexion selon l'invention peut comprendre une couche d'un matériau anti-corrosion qui s'étend transversalement sur la bande au moins entre les deux portions latérales. Selon un aspect de la présente invention, la couche de matériau anti-corrosion peut entourer la bande. Cette couche peut par exemple être délimitée par une surface plane pouvant passer par les sommets de deux portions latérales symétriques par rapport au deuxième plan de symétrie. Cette couche comble alors une cavité générée par la différence entre la deuxième épaisseur et la première épaisseur.

La surface plane délimitant cette couche peut par exemple faciliter la pose ultérieure d'un film chauffant sur l'organe de flexion. En effet, une surface plane permettra d'obtenir une meilleure adhérence du film chauffant qu'une surface présentant une incurvation.

Selon l'invention, la bande peut présenter une longueur maximale égale à 650mm. L'organe de flexion selon l'invention ayant pour objectif d'améliorer la souplesse des balais d'essuyage, il pourra par exemple être utilisé sur des balais d'essuyage dits « courts », soit présentant une longueur inférieure à 650mm. Pour les balais d'essuyage d'une longueur supérieure, on recherchera plutôt à rigidifier le balai en y intégrant d'autres types d'organe de flexion, tout en conservant le même connecteur standard.

L'organe de flexion selon la présente invention peut par exemple comprendre une vertèbre logée dans un support, la lame d'essuyage étant alors tenue par le support.

Selon une autre variante de réalisation, la lame d'essuyage est portée par au moins un organe de flexion, en étant notamment collée contre cet organe de flexion.

Selon l'un quelconque des modes de réalisation, le balai d'essuyage selon la présente invention peut comprendre un unique organe de flexion.

Cet organe de flexion peut également comprendre deux bandes longitudinales qui se logent chacune dans une rainure ménagée dans la lame d'essuyage, et par exemple ménagée entre un talon et une lèvre d'essuyage de cette lame.

L'invention vise aussi une gamme de balais d'essuyage comprenant au moins un premier balai d'essuyage et un deuxième balai d'essuyage, chaque balai d'essuyage comprenant au moins une lame d'essuyage destinée à venir en appui sur une surface vitrée, au moins un organe de flexion et un connecteur destiné à relier le balai d'essuyage à un bras d'entraînement, la lame d'essuyage et le connecteur des deux balais d'essuyage étant de conformation identique, l'organe de flexion du premier balai d'essuyage pouvant présenter une section globalement rectangulaire. Selon l'invention, le deuxième balai d'essuyage est quant à lui conforme à l'un quelconque des modes de réalisation revendiqués mentionnés ci-dessus.

Selon un mode de réalisation de la présente invention, le premier balai d'essuyage de cette gamme de balais d'essuyage présente une longueur d'au minimum 650 mm, tandis que le deuxième balai d'essuyage présente une longueur d'au maximum 650 mm.

Selon un exemple de réalisation de la présente invention, une épaisseur de l'organe de flexion du premier balai d'essuyage est sensiblement identique à la deuxième épaisseur d'au moins l'une des portions latérales de l'organe de flexion équipant le deuxième balai d'essuyage. Cette mesure d'épaisseur peut par exemple être réalisée dans un plan de coupe transversale passant par le connecteur de chacun des balais d'essuyage.

On comprend ici que la gamme de balais d'essuyage vise à fournir des balais d'essuyage couvrant une large portion du parc automobile, cette gamme de balais d'essuyage étant par exemple destinée au marché de la rechange automobile, autrement appelé deuxième monte.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon un exemple de réalisation de l'invention,
- les figures 2a et 2b sont des représentations schématiques, selon une coupe transversale, d'un organe de flexion réalisés selon deux modes de réalisation (fig. 2a selon l'invention, fig. 2b pas revendiqué),
- les figures 3 et 4 sont des représentations schématiques, selon une coupe transversale, de différents types de balais d'essuyage comprenant un organe de flexion non revendiqué. La figure 5 est une représentation schématique, selon une coupe transversale, d'un type de balai d'essuyage comprenant l'organe de flexion selon l'invention.
- la figure 6 est une représentation schématique d'une gamme de balais d'essuyage selon la présente invention.

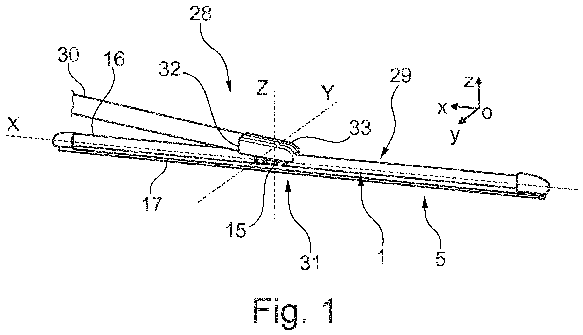

Dans la suite de la description, les dénominations longitudinales ou transversales se réfèrent à l'orientation d'un organe de flexion intégré à un balai d'essuyage. La direction longitudinale correspond à une direction d'extension longitudinale de l'organe de flexion, cette direction longitudinale étant parallèle à un axe Ox d'un repère orthonormé par exemple représenté à la figure 1. Une direction transversale correspond à une direction parallèle à un axe Oy de ce repère orthonormé, l'axe Oy étant perpendiculaire à l'axe Ox. Une direction verticale correspond à une direction parallèle à un axe Oz du repère orthonormé, l'axe Oz étant perpendiculaire à l'axe Ox et à l'axe Oy.

Les coupes transversales mentionnées ci-après sont quant à elles réalisées selon des plans de coupe perpendiculaires à l'axe Ox du repère orthonormé et dans lesquelles s'inscrivent les axes Oy et Oz de ce repère orthonormé.

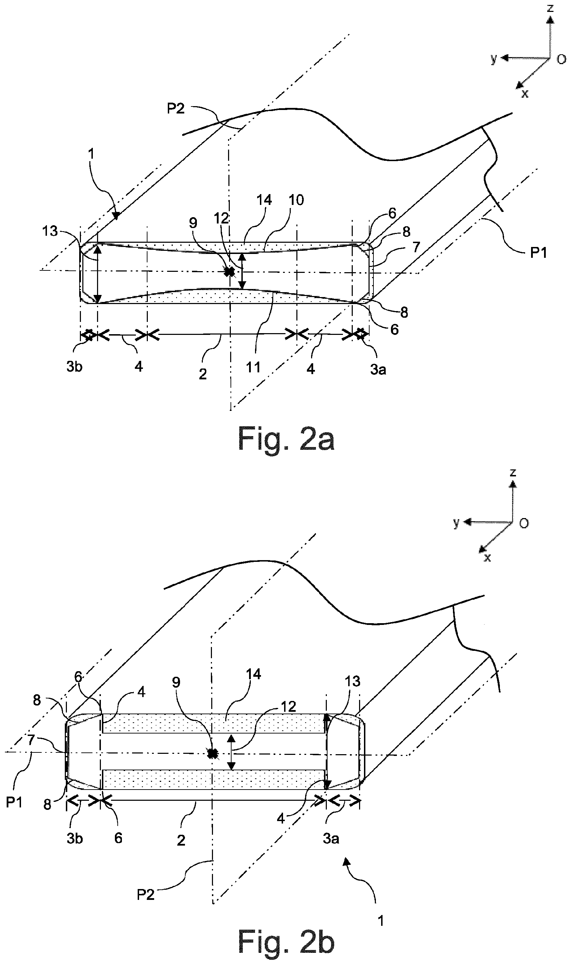

Les figures 2a à 5 décrites ci-après représentent des coupes transversales de l'organe de flexion seul ou intégré au balai d'essuyage et réalisées selon différents modes de réalisation. Il est à noter que cet organe de flexion prend la forme d'une bande métallique d'extension longitudinale.

Sur la figure 1 est représenté un système d'essuyage 28 configuré pour être installé sur un véhicule automobile et permettant d'évacuer une eau et/ou des salissures présentes sur une surface vitrée, notamment une lunette arrière ou un pare-brise de ce véhicule automobile. Le système d'essuyage 28 comprend un bras d'entraînement 30 apte à effectuer un mouvement de va-et-vient angulaire le long et au-dessus de la surface vitrée.

Le système d'essuyage 28 comprend aussi un balai d'essuyage 29 qui s'étend selon un axe longitudinal X parallèle à l'axe Ox. Le balai d'essuyage 29 comprend au moins un déflecteur d'air 16, une lame d'essuyage 17 et un organe de flexion 1, également appelé vertèbre. Selon la présente invention, cet organe de flexion 1 prend la forme d'une bande d'extension longitudinale parallèle à l'axe Ox et qui s'étend dans un plan Oxy.

Le déflecteur d'air 16 est prévu pour transformer une pression appliquée par un flux d'air circulant le long de la surface vitrée en une force d'appui du balai d'essuyage 29 contre la surface vitrée du véhicule automobile. La lame d'essuyage 17 est la pièce du balai d'essuyage 29 en contact direct avec la surface vitrée pour évacuer l'eau et/ou les salissures présentes sur cette dernière. Le déflecteur d'air 16, la lame d'essuyage 17 et l'organe de flexion 1 forment un ensemble semi-rigide 5 qui est porté par un dispositif de connexion 31, interposé entre le bras d'entraînement 30 et l'ensemble semi-rigide 5.

Le dispositif de connexion 31 assure une liaison mécanique entre une partie terminale 32 du bras d'entraînement 30 et le balai d'essuyage 29 et permet ainsi de séparer le balai d'essuyage 29 du bras d'entraînement 30, en vue d'un remplacement du balai d'essuyage 29.

Dans sa généralité, le dispositif de connexion 31 de la présente invention comprend un adaptateur 33 et un connecteur 15, ce connecteur 15 étant configuré pour enserrer l'organe de flexion 1 tel que cela sera décrit ci-après.

Les figures 2a et 2b illustrent, selon une coupe transversale, deux modes de réalisation d'un organe de flexion 1**.** Quel que soit le mode de réalisation, cet organe de flexion 1 présente une portion intermédiaire 2 disposée entre deux portions latérales 3a, 3b, la portion intermédiaire 2 présentant une première épaisseur 12 inférieure à une deuxième épaisseur 13 des portions latérales 3a, 3b.

Quel que soit le mode de réalisation de l'invention, la première épaisseur 12 est mesurée entre une première face 10 et une deuxième face 11 de l'organe de flexion 1, au voisinage d'un centre 9 de cette première épaisseur 12.

De même, la deuxième épaisseur 13 est mesurée au droit de deux sommets 6 d'une même portion latérale 3a, 3b décrits ci-après et cette deuxième épaisseur 13 est identique pour chacune des portions latérales 3a, 3b d'un même organe de flexion 1.

Ces première et deuxième épaisseurs 12, 13 sont constantes tout au long de la direction d'extension longitudinale de l'organe de flexion 1.

L'organe de flexion 1 selon la présente invention présente deux plans de symétrie : un premier plan P1 de symétrie dans lequel s'inscrivent les axes Ox et Oy du repère orthonormé tel que représenté à la figure 2a et un deuxième plan P2 de symétrie dans lequel s'inscrivent les axes Ox et Oz de ce repère orthonormé. Ces deux plans P1 et P2 de symétrie sont perpendiculaires entre eux et passent par le centre 9 de la première épaisseur 12 tels qu'illustrés aux figures 2a et 2b.

Une première portion latérale 3a est ainsi symétrique, par rapport au deuxième plan P2 de symétrie, à une deuxième portion latérale 3b, chacune de ces portions latérales 3a, 3b présentant alors, de manière symétrique, une tranche 7 longitudinale de la bande, deux sommets 6 ainsi que deux chanfreins 8 reliant chacun des sommets 6 à la tranche 7 longitudinale. On peut remarquer que l'ensemble de ces éléments se retrouve sur l'organe de flexion 1 qu'il soit réalisé selon un premier mode de réalisation illustré à la figure 2a ou selon un deuxième mode de réalisation représenté à la figure 2b.

De plus, cet organe de flexion 1 présente une transition 4 réalisée entre la portion intermédiaire 2 et chacune des portions latérales 3a, 3b.

Selon le premier mode de réalisation représenté à la figure 2a, la transition 4 est régulière et progressive. Selon ce premier mode de réalisation, l'organe de flexion 1 comprend une première face 10 présentant un profil concave vu depuis l'extérieur de l'organe de flexion 1. Le profil concave de cette première face 10 délimite un premier bord extérieur de l'organe de flexion 1 vue en coupe transversale.

Cet organe de flexion 1 présente aussi une deuxième face 11, symétrique à la première face 10 par rapport au premier plan P1 de symétrie. Cette deuxième face 11 présente ainsi également un profil concave vu de l'extérieur de l'organe de flexion 1 qui délimite un deuxième bord extérieur de l'organe de flexion 1 vue en coupe transversale.

Selon le deuxième mode de réalisation illustré à la figure 2b, la transition 4 est réalisée par un épaulement franc, c'est-à-dire une marche formée par deux plis à angle droit. Selon ce deuxième mode de réalisation, la première face 10 et la deuxième face 11 de l'organe de flexion 1 sont également symétriques par rapport au premier plan P1 de symétrie et présentent chacune un profil plat et régulier le long de la direction d'extension longitudinale de l'organe de flexion 1.

L'organe de flexion 1 est destiné à être intégré dans différents balais d'essuyage tel que cela est représenté aux figures 2 à 5 et notamment dans des balais d'essuyage dits « courts » c'est-à-dire présentant une longueur inférieure à 650mm. La première épaisseur 12 de la portion intermédiaire 2 est déterminée afin qu'une fois intégré aux balais d'essuyage cet organe de flexion 1 permette d'adapter la souplesse de ces balais courts. Cette première épaisseur est ainsi comprise entre 0.6 mm et 1.25 mm.

Les portions latérales 3a, 3b définissent chacune une zone d'accostage pour un connecteur de balai d'essuyage. Afin de permettre une standardisation de ce connecteur, la deuxième épaisseur 13 des parties latérales 3a, 3b peut être identique d'une longueur de balai d'essuyage court à une autre longueur. Ainsi, un connecteur standardisé est ajustable sur l'ensemble des organes de flexion réalisés, quel que soit le mode de réalisation choisi.

Afin d'améliorer la résistance à l'usure de l'organe de flexion 1, celui-ci peut optionnellement être recouvert d'une couche 14 d'un matériau anti-corrosion.

Selon les modes de réalisation illustrés, cette couche 14 peut recouvrir entièrement la périphérie de l'organe de flexion 1. Selon ces exemples, la couche 14 passe par chacun des sommets 6 des portions latérales 3a, 3b et peut combler une cavité générée par la différence d'épaisseur entre la portion intermédiaire 2 et les portions latérales 3a, 3b.

Selon une autre variante de réalisation non représentée ici, cette couche 14 peut également couvrir uniquement une partie des première et deuxième faces 10, 11 de l'organe de flexion 1. La couche 14 peut par exemple recouvrir uniquement la portion intermédiaire 2 de l'organe de flexion 1.

Avantageusement, et quel que soit le mode de réalisation de l'invention, cette couche 14 de matériau anti-corrosion peut être délimitée par une surface plane, permettant alors de faciliter la pose ultérieure d'un film chauffant qui présentera une meilleure adhérence sur une surface plane que sur une surface incurvée.

Ce film chauffant peut par exemple comprendre une piste électrique réalisée en un matériau résistif chauffant et un film mince en matière synthétique de support de la piste. La piste électrique est alors située sur une face supérieure du film synthétique dont une face inférieure est collée sur la surface plane délimitée par la couche 14 de matériau anti-corrosion qui comble la cavité générée par la différence d'épaisseur entre la portion intermédiaire 2 et les portions latérales 3a, 3b. Selon différents modes de réalisation, ce film chauffant peut par exemple s'étendre sur toute la longueur de la bande, ou sur une partie seulement de cette longueur.

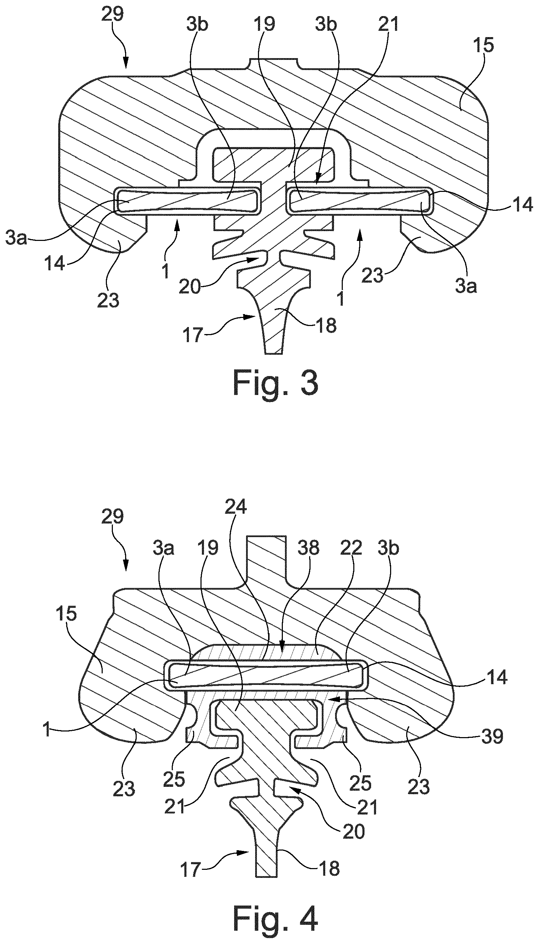

Les figures 3 à 5 illustrent différents mode de réalisation d'un balai d'essuyage 29. Comme mentionné précédemment, l'ensemble de ces figures représentent des coupes transversales de ces balais d'essuyage 29.

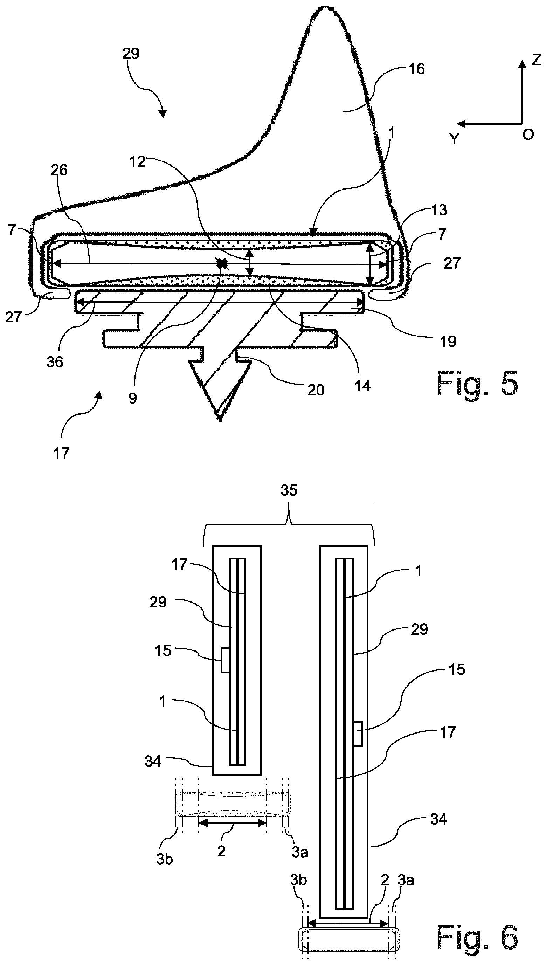

Les figures 3 et 4 sont des coupes transversales réalisées au niveau d'une zone présentant le connecteur 15 du balai d'essuyage 29, tandis que la figure 5 est une coupe transversale réalisée le long du balai d'essuyage 29 en dehors de la zone présentant le connecteur 15 du balai d'essuyage 29.

L'ensemble des balais d'essuyage 29 décrits ci-après sont illustrés intégrant l'organe de flexion 1 réalisé selon le premier mode de réalisation tel que représenté à la figure 2a, mais il est entendu que cet organe de flexion 1 pourrait également être réalisé selon le deuxième mode de réalisation illustré à la figure 2b sans que cela n'impacte ses fonctionnalités.

Quel que soit le mode de réalisation, le balai d'essuyage 29 comprend au moins la lame 17 d'essuyage présentant un talon 19 de forme sensiblement rectangulaire et une lèvre 18 d'essuyage destinée à venir en appui sur une surface vitrée. A la jonction entre ce talon 19 et cette lèvre 18, on peut noter la présence d'au moins une rainure 21 par exemple apte à recevoir au moins un organe de flexion 1.

La lèvre 18 d'essuyage peut également présenter une charnière 20, configurée pour améliorer la mobilité de la lèvre 18 d'essuyage. Cette charnière 20 permet notamment à la lèvre 18 d'essuyage de se retourner lors du changement de sens de balayage du balai d'essuyage 29 et permet ainsi à la lèvre 18 d'essuyage de balayer efficacement la surface vitrée dans deux sens de déplacement opposés.

La figure 3 représente un premier exemple de réalisation d'un balai d'essuyage 29 non revendiqué. Ce balai d'essuyage 29 comprend le connecteur 15, la lame 17 d'essuyage et deux organes de flexion 1, ces organes de flexion 1 étant ici coplanaires.

Le connecteur 15 présente, selon ce premier exemple de réalisation, deux crochets 23 configurés pour enserrer chacun un organe de flexion 1 au niveau de sa première portion latérale 3a. Ces crochets 23 présentent ainsi un espacement d'une taille équivalente à la deuxième épaisseur 13 des portions latérales 3a, 3b.

Cette deuxième épaisseur 13 étant identique à chacun des modes de réalisation de l'organe de flexion 1, le connecteur 15 et plus particulièrement ses crochets 23 peuvent être standardisés, afin qu'un seul type de connecteur 15 puisse être utilisé avec différents organes de flexion 1 et notamment avec plusieurs longueurs de l'organe de flexion 1.

La deuxième portion latérale 3b de chaque organe de flexion 1 quant à elle vient se loger dans la rainure 21 située à la jonction entre le talon 19 de la lame d'essuyage et la lèvre 18 de cette lame d'essuyage. Selon cet exemple de réalisation, ces deuxièmes portions latérales 3b de chaque organe de flexion 1 participent donc au maintien de la lame 17 d'essuyage.

Les organes de flexion 1 notamment de générer une courbure du balai d'essuyage 29 dans lequel ils sont intégrés tout en adaptant leur souplesse à leur longueur.

La figure 4 présente un deuxième exemple de réalisation d'un balai d'essuyage 29. Ce balai d'essuyage 29 comprend le connecteur 15, la lame 17 d'essuyage, un support 22 et un unique organe de flexion 1.

Le support 22 présente une partie supérieure 38 dans laquelle est ménagée une cavité tubulaire 24 apte à recevoir l'organe de flexion 1 et une partie inférieure 39 présentant deux pattes 25 configurées pour enserrer la lame 17 d'essuyage au niveau des rainures 21 décrites ci-dessus.

La figure 4 présente une coupe transversale du balai d'essuyage 29 réalisée au niveau du connecteur 15. Au niveau de ce connecteur 15, la partie supérieure 38 du support 22 présente des ouvertures qui permettent aux crochets 23 du connecteur 15 d'enserrer l'organe de flexion 1.

Les dimensions de ces crochets 23 sont déterminées pour enserrer les portions latérales 3a, 3b de l'organe de flexion 1. Selon ce deuxième mode de réalisation, le balai d'essuyage 29 représenté comprend un seul organe de flexion 1 et les crochets 23 du connecteur 15 viennent donc enserrer chacune des portions latérales 3a, 3b de cet organe de flexion 1.

Selon un exemple de réalisation, Le support 22 peut s'étendre sur au moins une longueur de la bande et avantageusement sur toute la longueur de la bande, l'organe de flexion 1 étant alors totalement logé dans la cavité tubulaire 24 de ce support 22. Avantageusement, le support 22 permet donc de protéger l'organe de flexion 1 de l'environnement extérieur tout en assurant un lien mécanique entre la lame 17 d'essuyage et l'organe de flexion 1.

Ce support 22 peut par exemple être réalisé dans un matériau synthétique.

L'organe de flexion 1 peut, de manière optionnelle, être recouvert d'une couche 14 de matériau anti-corrosion tel que décrit ci-dessus.

Comme mentionné précédemment, la figure 5 illustre un troisième exemple de réalisation de balai d'essuyage 29 selon la présente invention. Ce balai d'essuyage 29 est représenté selon une coupe transversale réalisée hors de la zone comprenant le connecteur, c'est-à-dire dans une demi-longueur du balai d'essuyage 29 comprise entre le connecteur et une extrémité longitudinale du balai d'essuyage 29.

Cette figure montre par ailleurs un mode de réalisation dans lequel l'organe de flexion 1 selon l'invention est intégré dans un balai d'essuyage 29 comprenant un déflecteur d'air 16.

Ce déflecteur d'air 16 peut par exemple être réalisé dans un matériau souple afin de pouvoir suivre les déformations de la lame 17 d'essuyage liées à la forme de la surface vitrée à essuyer, ainsi que la courbure des balais d'essuyage 29 générée par le ou les organes de flexion 1 selon la présente invention.

Selon le troisième exemple de réalisation de la présente invention illustré à la figure 5, le balai d'essuyage 29 comprend la lame 17 d'essuyage, un unique organe de flexion 1 selon la présente invention ainsi que le déflecteur d'air 16 tel que décrit auparavant.

Selon cet exemple de réalisation, la lame 17 d'essuyage est portée directement par l'organe de flexion 1 de la présente invention. Cet organe de flexion 1 peut ainsi être collé au talon 19 de la lame 17 d'essuyage.

Afin de faciliter le collage de la lame 17 d'essuyage sur l'organe de flexion 1, la couche 14 de matériau anti-corrosion peut présenter une surface plane telle que décrite ci-dessus.

Selon l'exemple de réalisation représenté sur cette figure 5, l'organe de flexion 1 présente une première largeur 26 supérieure à une deuxième largeur 36 du talon 19 de la lame 17 d'essuyage. Cette première largeur 26 est mesurée entre les deux tranches 7 longitudinales de l'organe de flexion 1 parallèlement à l'axe Oy du repère orthonormé représenté sur la figure. De la même manière, la deuxième largeur 36 du talon 19 de la lame 17 d'essuyage est mesurée parallèlement à cet axe Oy.

Grâce à cette différence de dimensions entre ces largeurs, deux excroissances 27 du déflecteur d'air 16 peuvent venir enserrer l'organe de flexion 1, facilitant ainsi son maintien en position.

Sur l'ensemble de ces balais d'essuyage, l'organe de flexion 1 est terminé longitudinalement par au moins un embout d'extrémité. Ce ou ces embouts d'extrémité permettent de terminer et de protéger la ou les extrémités longitudinales de ces organes de flexion 1. Avantageusement, chaque balai d'essuyage 29 présente ainsi deux embouts d'extrémité, respectivement disposés à chacune de ces extrémités longitudinales.

L'organe de flexion 1 selon la présente invention présente donc une portion intermédiaire 2 présentant une première épaisseur 12 et deux portions latérales 3a, 3b présentant chacune une deuxième épaisseur 13. Cette deuxième épaisseur 13 est identique pour chacune des portions latérales 3a, 3b sur toute la longueur de l'organe de flexion 1 et elle est inférieure à la première épaisseur 12 de la portion intermédiaire 2.

La portion intermédiaire 2 permet ainsi d'améliorer la souplesse du balai d'essuyage 29 auquel peuvent être intégrés le ou les organes de flexion 1, tandis que la dimension constante des portions latérales 3a, 3b permet une standardisation des connecteurs 15, simplifiant la fabrication, la gestion et la logistique de telles pièces.

La figure 6 illustre une gamme 35 de balais d'essuyage 29 selon la présente invention. Cette gamme 35 comprend au moins deux balais d'essuyage 29 de longueurs différentes et présentant chacun au moins un organe de flexion 1, un connecteur 15 et une lame 17 d'essuyage. Ces balais d'essuyage 29 peuvent être présentés dans deux emballages 34 distincts tel que représenté à la figure 6 ou, conformément à une variante de réalisation non représentée ici, dans un seul et même emballage 34, notamment dans le cas d'un balai d'essuyage destiné au côté conducteur et d'un balai d'essuyage destiné au côté passager.

La gamme 35 comprend au moins un premier balai d'essuyage 29 long présentant une longueur supérieure à 650mm et au moins un deuxième balai d'essuyage 29 court présentant quant à lui une longueur inférieure à 650mm. Les longueurs de ces balais d'essuyage 29 sont mesurées selon la direction d'extension longitudinale des organes de flexion 1 intégrés à ces balais d'essuyage 29.

Comme précédemment décrit, ces organes de flexion 1 permettent de générer une courbure du balai d'essuyage 29 assurant ainsi un essuyage efficace de la surface vitrée présentant ces balais d'essuyage 29. Chacun des balais d'essuyage 29 de la gamme 35 selon la présente invention comprend au moins un organe de flexion 1 dont la forme est adaptée à la longueur du balai d'essuyage 29 dans lequel il est intégré.

Ainsi, le premier balai d'essuyage 29 comprend un organe de flexion 1 présentant une section, vue en coupe transversale, globalement rectangulaire tandis que le deuxième balai d'essuyage 29 comprend un organe de flexion 1 selon la présente invention, c'est-à-dire dont l'épaisseur mesurée au centre est inférieur l'épaisseur mesurée sur au moins un de ces bords.

Tel qu'illustré sur la figure 6, chacun de ces organes de flexion 1 présente les deux portions latérales 3a, 3b et la portion intermédiaire 2. Chacune des portions latérales 3a, 3b de ces organes de flexion 1 sont identiques afin de permettre l'utilisation d'un connecteur standardisé tel que précédemment mentionné.

Les portions latérales 3a et 3b de l'organe de flexion 1 intégré au premier balai d'essuyage 29 présentent une épaisseur, mesurée le long de l'axe Oz, sensiblement identique à l'épaisseur de sa portion intermédiaire 2 mesurée selon le même axe Oz.

Lorsque le balai d'essuyage 29 est long, tel que c'est le cas pour le premier balai d'essuyage 29 de la gamme 35, il convient de choisir un organe de flexion 1 dit « classique » qui permet de rigidifier le balai d'essuyage 29. En revanche, lorsque le balai d'essuyage 29 est court, tel que c'est le cas pour le deuxième balai d'essuyage 29 de la gamme 35, un organe de flexion 1 selon la présente invention est plus approprié car il permet d'adapter la souplesse de ce balai d'essuyage 29.

Les épaisseurs des portions latérales 3a et 3b du premier et du deuxième balais d'essuyage 29 constitutifs de la gamme 35 sont identiques, à la tolérance de fabrication près. Une même référence de connecteur 15 peut alors être exploitée pour l'assemblage de ces deux balais d'essuyage 29.

L'invention ne saurait toutefois se limiter aux moyens et configurations décrits et illustrés ici, et elle s'étend également à tous moyens ou configurations équivalents et à toute combinaison techniquement opérante de tels moyens. En particulier, la forme et les dimensions de l'organe de flexion 1 peuvent être modifiées sans nuire à l'invention, dans la mesure où elles remplissent les fonctionnalités décrites dans le présent document.

## Revendications

1. Balai d'essuyage (29) pour véhicule comprenant au moins une lame (17) d'essuyage destinée à venir en appui sur une surface vitrée et au moins un organe de flexion (1) logé dans un support (22), la lame (17) d'essuyage étant tenue par le support (22), l'organe de flexion (1) étant configuré pour générer une courbure du balai d'essuyage (29), l'organe de flexion (1) étant agencé en forme de bande d'extension longitudinale, la bande comprenant, vue en coupe transversale, une portion intermédiaire (2) disposée entre deux portions latérales (3a, 3b) de la bande, une première épaisseur (12) de la portion intermédiaire (2) est inférieure à une deuxième épaisseur (13) d'au moins l'une des portions latérales (3a, 3b), la portion intermédiaire de l'organe de flexion (1) étant délimitée par une première face (10) qui présente un profil concave, vue depuis l'extérieur de l'organe de flexion, l'organe de flexion comprenant au moins une transition (4) qui s'opère de manière régulière et progressive entre la portion intermédiaire (2) et au moins une des portions latérales (3a, 3b), au moins une portion latérale (3a, 3b) de l'organe de flexion (1) comprenant une tranche (7) longitudinale de la bande, deux sommets (6) et deux chanfreins (8) qui relient chaque sommet (6) à la tranche (7) longitudinale.

2. Balai d'essuyage (29) selon la revendication précédente, dans lequel la première épaisseur (12) de la portion intermédiaire (2) de la bande est inférieure à la deuxième épaisseur (13) de chacune des portions latérales (3a, 3b).

3. Balai d'essuyage (29) selon la revendication 2, dans lequel la portion intermédiaire (2) de l'organe de flexion (1) est délimitée par une deuxième face (11) opposée à la première face (10) par rapport à un premier plan (P1) de symétrie passant au centre (9) de la première épaisseur (12), la deuxième face (11) présentant un profil concave, vue depuis l'extérieur de l'organe de flexion (1).

4. Balai d'essuyage (29) selon l'une quelconque des revendications précédentes, dans lequel la deuxième épaisseur (13) est identique à chacune des deux portions latérales (3a, 3b) de la bande.

5. Balai d'essuyage (29) selon l'une quelconque des revendications précédentes, dans lequel la bande présente une symétrie de formes par rapport au premier plan (P1) de symétrie qui coupe la bande dans son épaisseur.

6. Balai d'essuyage (29) selon l'une quelconque des revendications 3 ou 5, dans lequel la bande présente une symétrie de formes par rapport à un deuxième plan (P2) de symétrie, perpendiculaire au premier plan (P1) de symétrie et passant par le centre (9) de la première épaisseur (12).

7. Balai d'essuyage (29) selon l'une quelconque des revendications précédentes, dans lequel l'organe de flexion (1) comprend une couche (14) d'un matériau anti-corrosion qui s'étend transversalement sur la bande au moins entre les deux portions latérales (3a, 3b).

8. Balai d'essuyage (29) selon la revendication précédente, dans lequel la couche (14) entoure la bande.

9. Balai d'essuyage (29) selon l'une quelconque des revendications 7 ou 8, dans lequel la couche (14) est délimitée par une surface plane.

10. Balai d'essuyage (29) selon l'une quelconque des revendications 7 à 9, dans lequel la couche (14) comble une cavité générée par la différence entre la deuxième épaisseur (13) et la première épaisseur (12).

11. Balai d'essuyage (29) selon l'une quelconque des revendications précédentes, comprenant un unique organe de flexion (1).

## Patentansprüche

1. Wischblatt (29) für ein Fahrzeug, beinhaltend mindestens eine Wischleiste (17), die dazu bestimmt ist, auf einer Glasscheibe zur Anlage zu kommen, und mindestens ein Biegeelement (1), das in einer Halterung (22) aufgenommen ist, wobei die Wischleiste (17) von der Halterung (22) gehalten wird, wobei das Biegeelement (1) dazu konfiguriert ist, eine Krümmung des Wischblatts (29) zu erzeugen, wobei das Biegeelement (1) in Form eines Streifens mit länglicher Ausdehnung angeordnet ist, wobei der Streifen im Querschnitt gesehen einen mittleren Abschnitt (2) beinhaltet, der zwischen zwei Seitenabschnitten (3a, 3b) des Streifens angeordnet ist, wobei eine erste Dicke (12) des mittleren Abschnitts (2) kleiner als eine zweite Dicke (13) mindestens eines der Seitenabschnitte (3a, 3b) ist, wobei der mittlere Abschnitt des Biegeelements (1) durch eine erste Fläche (10) begrenzt wird, die, von der Außenseite des Biegeelements aus gesehen, ein konkaves Profil aufweist, wobei das Biegeelement mindestens einen Übergang (4) beinhaltet, der regelmäßig und progressiv zwischen dem mittleren Abschnitt (2) und mindestens einem der Seitenabschnitte (3a, 3b) verläuft, wobei mindestens ein Seitenabschnitt (3a, 3b) des Biegeelements (1) eine Längskante (7) des Streifens, zwei Scheitel (6) und zwei Fasen (8), die jeden Scheitel (6) mit der Längskante (7) verbinden, beinhaltet.

2. Wischblatt (29) nach dem vorhergehenden Anspruch, wobei die erste Dicke (12) des mittleren Abschnitts (2) des Streifens kleiner als die zweite Dicke (13) jedes der Seitenabschnitte (3a, 3b) ist.

3. Wischblatt (29) nach Anspruch 2, wobei der mittlere Abschnitt (2) des Biegeelements (1) durch eine zweite Fläche (11) begrenzt wird, die mit Bezug auf eine erste Symmetrieebene (P1), die durch die Mitte (9) der ersten Dicke (12) verläuft, gegenüber der ersten Fläche (10) liegt, wobei die zweite Fläche (11) von der Außenseite des Biegeelements (1) aus gesehen ein konkaves Profil aufweist.

4. Wischblatt (29) nach einem der vorhergehenden Ansprüche, wobei die zweite Dicke (13) an jedem der zwei Seitenabschnitte (3a, 3b) des Streifens identisch ist.

5. Wischblatt (29) nach einem der vorhergehenden Ansprüche, wobei der Streifen mit Bezug auf die erste Symmetrieebene (P1), die den Streifen entlang seiner Dicke schneidet, eine Formensymmetrie aufweist.

6. Wischblatt (29) nach einem der Ansprüche 3 oder 5, wobei der Streifen mit Bezug auf eine zweite Symmetrieebene (P2), die zu der ersten Symmetrieebene (P1) senkrecht ist und durch die Mitte (9) der ersten Dicke (12) verläuft, eine Formensymmetrie aufweist.

7. Wischblatt (29) nach einem der vorhergehenden Ansprüche, wobei das Biegeelement (1) eine Schicht (14) aus einem Antikorrosionsmaterial beinhaltet, die sich mindestens zwischen den zwei Seitenabschnitten (3a, 3b) in Querrichtung auf dem Streifen erstreckt.

8. Wischblatt (29) nach dem vorhergehenden Anspruch, wobei die Schicht (14) den Streifen umgibt.

9. Wischblatt (29) nach einem der Ansprüche 7 oder 8, wobei die Schicht (14) durch eine ebene Oberfläche begrenzt wird.

10. Wischblatt (29) nach einem der Ansprüche 7 bis 9, wobei die Schicht (14) einen Hohlraum ausfüllt, der durch die Differenz zwischen der zweiten Dicke (13) und der ersten Dicke (12) erzeugt wird.

11. Wischblatt (29) nach einem der vorhergehenden Ansprüche, das ein einziges Biegeelement (1) beinhaltet.

## Claims

1. A vehicle wiper blade (29) including at least one wiper rubber (17) intended to come to bear on a glazed surface and at least one bending member (1) housed in a support (22), the wiper rubber (17) being retained by the support (22), the bending member (1) being configured to generate a curvature of the wiper blade (29), the bending member (1) being in the form of a longitudinally extending strip, the strip including, seen in cross section, an intermediate portion (2) disposed between two lateral portions (3a, 3b) of the strip, the first thickness (12) of the intermediate portion (2) is less than a second thickness (13) of at least one of the lateral portions (3a, 3b), the intermediate portion (2) of the bending member (1) being delimited by a first face (10) that has a concave profile seen from the exterior of the bending member (1), the bending member including at least one transition (4) regularly and progressively disposed between the intermediate portion (2) and at least one of the lateral portions (3a, 3b), at least one lateral portion (3a, 3b) of the bending member (1) including a longitudinal edge surface (7) of the strip, two tops (6) and two chamfers (8) that connect each top (6) to the longitudinal edge surface (7).

2. The wiper blade (29) as claimed in the preceding claim, in which the first thickness (12) of the intermediate portion (2) of the strip is less than the second thickness (13) of each of the lateral portions (3a, 3b).

3. The wiper blade (29) as claimed in claim 2, in which the intermediate portion (2) of the bending member (1) is delimited by a second face (11) opposite the first face (10) with respect to a first plane (P1) of symmetry passing through the center (9) of the first thickness (12), the second face (11) having a concave profile seen from the exterior of the bending member (1).

4. The wiper blade (29) as claimed in any one of the preceding claims, in which the second thickness (13) is identical at each of the two lateral portions (3a, 3b) of the strip.

5. The wiper blade (29) as claimed in any one of the preceding claims, in which the strip has a symmetry of shapes with respect to the first plane (P1) of symmetry that intersects the strip within its thickness.

6. The wiper blade (29) as claimed in either one of claims 3 or 5, in which the strip has a symmetry of shapes with respect to a second plane (P2) of symmetry perpendicular to the first plane (P1) of symmetry and passing through the center (9) of the first thickness (12).

7. The wiper blade (29) as claimed in any one of the preceding claims, in which the bending member (1) includes a layer (14) of an anti-corrosion material that extends transversely over the strip at least between the two lateral portions (3a, 3b).

8. The wiper blade (29) as claimed in the preceding claim, in which the layer (14) surrounds the strip.

9. The wiper blade (29) as claimed in either one of claims 7 or 8, in which the layer (14) is delimited by a plane surface.

10. The wiper blade (29) as claimed in any one of claims 7 to 9, in which the layer (14) fills a cavity generated by the difference between the second thickness (13) and the first thickness (12).

11. The wiper blade (29) as claimed in any one of the preceding claims, including a single bending member (1).
